# EUROPÄISCHE PATENTANMELDUNG

(11) **EP 4 636 368 A1**
(43) Veröffentlichungstag der Anmeldung: **22.10.2025**
(21) Anmeldenummer: 24170580.5
(22) Anmeldetag: 16.04.2024
(51) Int. Cl.: G01H 1/04, H01R 13/641, G01M 7/00

(54) **VERFAHREN ZUR ERKENNUNG WENIGSTENS EINER INSTALLATIONSHANDLUNG BEI EINER INDUSTRIELLEN ANLAGE**

(71) Anmelder: Murrelektronik GmbH, 71570 Oppenweiler (DE)
(72) Erfinder: Pfestorf, Sebastian, 71570 Oppenweiler (DE); Zeller, Dr. Paul, 74223 Flein (DE)
(74) Vertreter: Bösherz Goebel Patentanwälte

(57) **Zusammenfassung**

Die Erfindung betrifft ein Verfahren (100) zur Erkennung wenigstens einer Installationshandlung bei einer industriellen Anlage (1), insbesondere einer elektrischen Maschine und/oder einer industriellen Automatisierungsanlage, bei welcher eine Verbindung von Komponenten (80) der Anlage (1) im Feld durch ein oder mehrere Anschlusselemente (10), insbesondere Module (10), sowie über ein oder mehrere Verbindungsmittel (90) vorgesehen ist.

## Beschreibung

Die vorliegende Erfindung betrifft ein Verfahren zur Erkennung wenigstens einer Installationshandlung bei einer industriellen Anlage. Ferner bezieht sich die Erfindung auf ein Anschlusselement, ein Computerprogramm sowie eine Vorrichtung zu diesem Zweck.

### Stand der Technik

Es ist aus dem Stand der Technik bekannt, dass bei industriellen Automatisierungsanlagen zur Installation und Wartung oft viele einzelne Installationshandlungen vorgenommen werden müssen. Eine fehlerhafte Durchführung auch nur von wenigen der Installationshandlungen kann dabei die Funktionsfähigkeit der Anlage massiv beeinträchtigen. Gleichzeitig sind solche Fehler nur schwer nachvollziehbar. Eine nachträgliche Diagnose und Kontrolle ist dann oft mit viel Aufwand und hohen Kosten verbunden.

Eine Lösung zur allgemeinen Diagnose bei Automatisierungsanlagen ist bspw. aus der Druckschrift DE 10 2021 108770 A1 bekannt. Hierbei können, um die Funktion eines IO-Link-Systems zu überwachen, Diagnose-Daten über den aktuellen Zustand einer Infrastrukturkomponente, z. B. deren Eingangsspannung, deren Ausgangsstrom, ein Wirkungsgrad der Energieübertragung, die Eigentemperatur der Komponente, die Signalqualität und/oder Ähnliches, oder über den Zustand der Umgebung der Infrastrukturkomponente, z. B. Vibrationen, die Umgebungstemperatur, die Feuchtigkeit, die Neigung und/oder Ähnliches, aufgenommen werden.

Weitere gattungsgemäße Lösungen sind ferner aus den Druckschriften DE 1020 15109482 A1 und DE 10 2013 100987 A1 bekannt.

### Offenbarung der Erfindung

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und automatisierbare Lösung zur Überwachung von Installationshandlungen vorzuschlagen.

Gegenstand der Erfindung ist ein Verfahren mit den Merkmalen des Anspruchs 1, ein Anschlusselement mit den Merkmalen des Anspruchs 10, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Anschlusselement, dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zur Erkennung, und vorzugsweise zur Überwachung und/oder Diagnose, wenigstens einer Installationshandlung bei einer industriellen Anlage. Die Anlage kann dabei als eine elektrische Maschine und/oder eine industrielle Automatisierungsanlage ausgeführt sein.

Die Anlage kann ferner bspw. pneumatische und/oder hydraulische und/oder fluidtechnische und/oder elektrische und/oder mechanische Komponenten aufweisen. Eine Anlage, die pneumatische Komponenten aufweist, ist beispielsweise eine pneumatische Förderanlage, die Materialien eines Ortes zum anderen transportiert. Eine Anlage mit hydraulischen Komponenten kann z. B. eine hydraulische Presse sein. Eine Anlage mit fluidtechnischen Komponenten ist bspw. eine Kühlanlage sein, die Flüssigkeiten zur Kühlung von Maschinen verwendet. Falls elektrische Komponenten vorgesehen sind, kann die Anlage bspw. eine Automatisierungsanlage sein, welche ein oder mehrere Elektromotoren und/oder eine elektrische Steuerungsanlage und/oder Roboter umfasst, um bspw. Materialien/Produkte zu transportieren und/oder zu halten und/oder zu verarbeiten und/oder zu montieren. Eine Anlage mit mechanischen Komponenten ist bspw. eine mechanische Presse oder eine Anlage mit wenigstens einer Greifvorrichtung oder dergleichen. Auch kann die industrielle Automatisierungsanlage eine Kombination aus den voranstehenden umfassen. Bspw. ist die Anlage als eine Roboteranlage ausgeführt, die automatisch Materialien transportiert, bearbeitet oder montiert.

Es ist bei der Anlage möglich, dass eine Verbindung von Komponenten der Anlage im Feld durch ein oder mehrere Anschlusselemente, insbesondere Module und/oder Klemmkästen, und/oder über ein oder mehrere Verbindungsmittel, vorzugsweise Kabel und/oder Steckverbinder, vorgesehen ist. Die Verbindungsmittel können dabei zum Energie- und/oder Signal- und/oder Datenaustausch dienen. Die Anschlusselemente können mehrere Anschlüsse aufweisen, an denen die Komponenten über die Verbindungsmittel angeschlossen werden können. Die Verbindungen zwischen Komponenten, Anschlusselemente und Verbindungsmittel können dabei insgesamt zur Bereitstellung von Automatisierungsfunktonen der Anlage dienen. Der Aufbau bzw. die Struktur der Verbindungen kann dabei über eine Topologie der Anlage beschrieben werden.

Das erfindungsgemäße Verfahren kann die nachfolgenden Schritte umfassen, welche vorzugsweise nacheinander in der angegebenen Reihenfolge und/oder wiederholt und/oder automatisiert durchgeführt werden:
- Ermitteln von Vibrationsdaten, vorzugsweise digitalen Vibrationsdaten, wobei die Vibrationsdaten aus einer sensorischen Erfassung zumindest eines der einen oder mehreren Anschlusselemente und/oder an zumindest einem der einen oder mehreren Verbindungsmittel resultiert,
- Auswerten der Vibrationsdaten, wobei die Vibrationsdaten hinsichtlich einer Signatur untersucht werden, welche für die wenigstens eine Installationshandlung in der Anlage spezifisch ist,
- Erkennen der wenigstens einen Installationshandlung auf Basis der Auswertung.

Dies hat den Vorteil, dass nicht nur eine allgemeine Diagnose möglich ist, sondern konkret Installationshandlungen an der Anlage erkannt und ggf. diagnostiziert werden können.

Um die Vibrationsdaten ermitteln zu können und/oder die sensorische Erfassung durchzuführen kann wenigstens ein Sensor, vorzugsweise Vibrationssensor, in dem einen oder den mehreren Anschlusselementen, vorzugsweise Modulen, und/oder an dem einen oder den mehreren Verbindungsmitteln, vorzugsweise Kabeln und/oder Steckverbindern, vorgesehen sein. Der Sensor/Vibrationssensor kann somit Vibrationen erfassen/messen und die Vibrationsdaten ausgeben, welche die erfassten Vibrationen repräsentieren und/oder die Messwerte bereitstellen können. Auf diese Weise ist es z. B. möglich, ein Rattern in dem einen oder den mehreren Anschlusselementen festzustellen.

Es kann durch eine Auswertung der Vibrationsdaten ggf. ermittelt werden, ob die Installationshandlung korrekt durchgeführt wurde, bspw. ob ein Stecker "IP67 fähig" in einem Anschluss gedreht wurde. Der Sensor/Vibrationssensor erfasst somit das Anschließen/hineindrehen. Dabei können insbesondere durch die Vibrationen Installationshandlungen erfasst und klassifiziert werden. Die Anschlusselemente, vorzugsweise Module, sind dabei bspw. als I/O-Link Master Module ausgebildet.

Die Erfindung basiert insbesondere auf der Erkenntnis, dass Werkzeuge zur Durchführung der Installationshandlung, wie ein Drehmomentschlüssel beim Festziehen, eine Vibration verursachen. Das gleiche gilt bspw. für ein Stecken und Hineindrehen an Anschlüssen.

Die Integration eines Sensors und vorzugsweise Vibrationssensors in das oder die Anschlusselemente hat den Vorteil, dass die Anschlusselemente dezentral im Feld der Anlage zum Einsatz kommen und die Installationshandlungen somit dezentral in der Anlage dort überwacht werden, wo sie getätigt werden. Die Anschlusselemente können dabei als Schnittstellen zwischen den verschiedenen Komponenten der Anlage wie Sensoren und Aktoren und wenigstens einer dezentralen oder zentralen Steuerungseinrichtung wie einer SPS im Feld dienen. Dabei können die Anschlusselemente bspw. als IO-Link-Module und/oder als Feldbusmodule, ggf. jeweils mit der Schutzart IP67, ausgeführt sein. Die Anschlusselemente können ferner primär zur Verbindung der Komponenten mit einer Steuerungseinrichtung dienen. Darüber hinaus können die Anschlusselemente als spezialisierte Module wie IO-Link-Hubs und/oder Analog-Konverter ausgeführt sein, letztere bspw. zur Integration von analogen Sensoren und Aktoren. Ferner ist es möglich, dass die Anschlusselemente als Funktionsmodule ausgeführt sind, welche eine erweiterte Funktionalität zur Unterstützung der Installation und Inbetriebnahme aufweisen.

Im Rahmen der Erfindung kann ein Anschlusselemente, vorzugsweise Modul, einen Verteiler und/oder ein Verbindungsmodul bezeichnen, welcher/welches zur dezentralen Verschaltung von Komponenten wie Aktoren, Sensoren und Maschinen in der Anlage dient. Dabei kann der Verteiler als ein Feldbusmodul ausgebildet sein, welches über einen Feldbus mit wenigstens einer dezentralen wie einer dezentralen Automatisierungsplattform oder zentralen Steuerungseinrichtung wie einer SPS (Speicherprogrammierbaren Steuerung) verbunden ist.

Wenn ein Anschlusselement als Feldbusmodule ausgebildet ist, ermöglicht es vorteilhafterweise eine Kommunikation zwischen wenigstens einer Steuerungseinrichtung und den mit dem Anschlusselement verbundenen Komponenten unter Verwendung eines Feldbusprotokolls wie bspw. PROFIBUS, PROFINET, CANopen oder EtherCAT. Es können an dem Anschlusselement mehrere Komponenten angeschlossen werden, ggf. auch über IO-Link und insbesondere, um auf Basis/mittels eines empfangenen Feldbussignals die Komponenten anzusteuern und/oder auszulesen.

Eine weitere mögliche Variante eines Anschlusselements kann ggf. auch direkt ein elektrisches Steuersignal und/oder Sensorsignal zwischen der zentralen Steuerungseinrichtung und wenigstens einer Komponente weiterleiten. Ferner kann das Anschlusselement als ein I/O-Modul ausgebildet sein, bei dem die angeschlossenen Komponenten nicht oder nicht nur über einen Feldbus, sondern (auch) über digitale oder analoge Ein- und Ausgänge über das Anschlusselement mit der Steuerungseinrichtung verbunden werden.

Allgemeiner formuliert dient das Anschlusselement vorzugsweise als Schnittstelle zwischen wenigstens einer Steuerungseinrichtung und den mit dem Anschlusselement verbundenen Komponenten wie Sensoren, Aktoren und Maschinen und kann eine Umwandlung und Verarbeitung von Signalen aus der Steuerungseinrichtung in für die Komponenten nutzbare Signale und umgekehrt vornehmen. Die Ein- und Ausgänge ermöglichen dabei eine Übertragung von Prozessdaten, um die Funktionalität der Anlage bereitzustellen.

Das Anschlusselement kann ferner als ein IO-Link-Modul ausgebildet sein. Dies bedeutet, dass die Kommunikation zwischen dem Anschlusselement, vorzugsweise Modul und den damit verbundenen Komponenten über den IO-Link-Standard erfolgt. IO-Link ermöglicht eine digitale Kommunikation mit den Komponenten und bietet eine hohe Flexibilität bei der Anbindung von Komponenten unterschiedlicher Hersteller. Das Anschlusselement kann dabei als IO-Link-Master oder IO-Link-Device ausgebildet sein und ermöglicht somit eine einfache Integration von IO-Link-Komponenten in die dezentrale Verschaltung der Anlage. Darüber hinaus kann das Anschlusselement eine Feldbusschnittstelle aufweisen (und daher gleichzeitig auch als Feldbusmodul ausgebildet sein), um bspw. Steuerungsbefehle und/oder eine Kommunikation über einen Feldbus mit einer Steuerungseinrichtung und/oder weiteren Anschlusselementen, vorzugsweise Modulen, und/oder dezentralen Automatisierungsplattformen zu ermöglichen.

Optional kann es vorgesehen sein, dass das jeweilige Anschlusselement, vorzugsweise Modul, eine Mehrzahl von Leuchtmitteln, vorzugsweise LEDs, aufweist, welche jeweils einem Anschluss, vorzugsweise Port oder mehreren Anschlüssen, vorzugsweise Ports, des Anschlusselements zugeordnet sind und ggf. betrieben werden, um einen Betriebszustands des jeweiligen Anschlusses / der Anschlüsse anzeigen.

Die Vibrationsdaten werden vorzugsweise auf Basis einer sensorische Erfassung ermittelt. Hierzu können verschiedene Sensoren zum Einsatz kommen, wie bspw. ein Vibrations- und/oder Glasfasersensor am Verbindungsmittel, insbesondere Kabel, und/oder am Anschlusselement, insbesondere Modul. Das Verbindungsmittel und/oder das Anschlusselement kann eine Übertragungsleitung zur Übertragung von Energie und/oder Daten und/oder Signalen aufweisen, insbesondere zur Übertragung zwischen Komponenten der Anlage. Es kann ferner eine Sensorik für die sensorische Erfassung in das Verbindungsmittel und/oder das Anschlusselement und/oder in die Übertragungsleitung integriert sein, um vorzugsweise eine sensorgestützte Überwachung des Verbindungsmittels und/oder des Anschlusselements und/oder der Übertragungsleitung bereitzustellen.

Um die integrierte Sensorik bereitzustellen, kann vorgesehen sein, dass die Übertragungsleitung als eine Lichtleiterübertragungsleitung ausgebildet ist und ein Sensorelement im Bereich der Übertragungsleitung angeordnet ist, Alternativ oder zusätzlich kann das Sensorelement selbst als Lichtleiterelement ausgebildet sein. Somit ist es möglich, die sensorische Erfassung als eine lichtleiterbasierte Erfassung bereitzustellen, Ein Lichtleiter kann dabei - als Sensorik eingesetzt - eine hohe Sensitivität und Genauigkeit bereitstellen, um bspw. Vibration und/oder Temperatur und/oder Strom und/oder Spannung und/oder Geräusche und/oder Feuchtigkeit und/oder Dehnung und/oder Biegung und/oder Länge, vorzugsweise Kabellänge, und/oder einen Druck zu messen. Auf diese Weise können bspw. Fehler und/oder Anomalien und/oder Beschädigungen an der Anlage durch die sensorische Erfassung ermittelt werden. Die Handlungs- und/oder Installationsinformation kann dann entsprechend auf eine dieser Fehler und/oder Anomalien und/oder Beschädigungen inkl. dem zugehörigen Handlungsort, also bspw. Fehlerort, hinweisen.

Darüber hinaus ist es möglich, dass auf Basis der sensorischen Erfassung auch eine Topologie der Anlage ermittelt wird, insbesondere auf Grundlage der durch die Erfassung ermittelten Kabellängen. Die Kenntnis über die Topologie kann dann ggf. bei der Erkennung und/oder Diagnose der wenigstens einen Installationshandlung verwendet werden.

Gemäß einem weiteren Vorteil kann vorgesehen sein, dass die industrielle Anlage als eine industrielle Automatisierungsanlage ausgeführt ist, bei welcher zumindest ein Teil der Komponenten als Geräte ausgeführt ist, die zumindest Aktoren und/oder Sensoren umfassen, um Automatisierungsfunktionen der Anlage bereitzustellen. Dies kann den Vorteil haben, dass die industrielle Anlage eine Bereitstellung von effizienten Automatisierungsfunktionen ermöglicht.

Weiter können die Komponenten und insbesondere Geräte über die Verbindungsmittel, insbesondere Kabel, mit den Anschlusselementen verbunden sein, um über die Verbindung von zumindest einer Steuerungseinrichtung angesteuert und/oder ausgewertet zu werden. Die zumindest eine Steuerungseinrichtung umfasst bspw. genau eine zentrale und/oder mehrere dezentrale Steuerungseinrichtungen. Es ist denkbar, dass die Steuerungseinrichtungen zumindest teilweise außerhalb der Anschlusselemente vorgesehen sind. Alternativ oder zusätzlich ist es denkbar, dass die oder wenigstens eine der Steuerungseinrichtungen in wenigstens eines der Anschlusselemente integriert ist.

Ferner ist es möglich, dass eine oder mehrere Gruppen der Komponenten, vorzugsweise Geräte, jeweils umfassend eine Mehrzahl der Komponenten/Geräte, jeweils über die Verbindungsmittel mit einem gemeinsamen der Anschlusselemente verbunden werden. Mit anderen Worten können die Komponenten/Geräte in Gruppen unterteilt werden. Die Komponenten/Geräte einer gemeinsamen Gruppe werden dann einem gemeinsamen Anschlusselement zugeordnet und mit diesem verbunden, d. h. daran angeschlossen. Andere Gruppen bzw. deren Komponenten/Geräte können entsprechend mit anderen gemeinsamen Anschlusselementen verbunden werden.

Dies ermöglicht es den Komponenten/Geräten einer Gruppe, darüber dezentral im Feld der Anlage, und insbesondere über das entsprechende Anschlusselement als Verteiler, mit der (wenigstens oder genau einen) Steuerungseinrichtung für die Ansteuerung und/oder Auswertung zum Daten- und/oder Signalaustausch verbunden zu werden. Auf diese Weise können die Automatisierungsfunktionen der Anlage zuverlässig bereitgestellt. Dabei können optional die Komponenten/Geräte zumindest einer der Gruppen mit ihrem gemeinsamen Anschlusselement, vorzugsweise sternförmig, verbunden werden, und bevorzugt über das gemeinsamen Anschlusselement an ein Feldbussystem angebunden werden.

Weiter ist es möglich, dass die wenigstens eine Installationshandlung eine Herstellung zumindest einer der Verbindungen zwischen den Komponenten, vorzugsweise Geräten, und den Anschlusselementen umfasst. Somit wird der Vorteil erzielt, dass durch das erfindungsgemäße Verfahren diese für den Betrieb der Anlage wesentlichen Installationshandlungen überwacht und insbesondere diagnostiziert werden können. Dies kann besonders bei einer solchen komplexen Anlagenstruktur die Installation und Wartung deutlich vereinfachen.

Es kann von Vorteil sein, wenn im Rahmen der Erfindung das Anschlusselement bzw. zumindest eines der Anschlusselemente selbst die Steuerungseinrichtung umfasst, um darüber zumindest einen Teil der gesamten Anlage zu automatisieren.

Vorzugsweise kann das oder eines der Anschlusselemente als eine dezentrale Automatisierungsplattform ausgebildet sein, das mit (den) weiteren Automatisierungsplattformen dezentral in der Anlage die Automatisierung der Anlage bereitstellt.

Bevorzugt können die mehreren Anschlusselemente jeweils als eine dezentrale Automatisierungsplattform ausgebildet sein. Die Anschlusselemente können dann gemeinsam und dezentral in der Anlage die Automatisierung der Anlage bereitstellen.

Dabei kann die wenigstens eine Installationshandlung eine mechanische und/oder elektrische Installation der wenigstens einen Automatisierungsplattform umfassen.

Beispielsweise kann es vorgesehen sein, dass bei dem Erkennen zumindest eine der nachfolgenden Arten und/oder Ergebnisse der Installationshandlung unterschieden wird, vorzugsweise durch eine Klassifizierung der Installationshandlung anhand der Signatur:
- eine Herstellung einer Steckverbindung am Anschlusselement,
- Einführen wenigstens eines der Verbindungsmittel in einen Anschluss, vorzugsweise Port des Anschlusselements,
- Fixieren des Verbindungsmittels durch ein Drehen oder Einrasten,
- Vollständigkeit des Einrastens,
- Vollständigkeit der Drehung,
- ein erfolgreicher Abschluss der Installationshandlung,
- eine Art oder Kennzeichnung des Verbindungsmittels,
- eine Unvollständigkeit der Installationshandlung,
- eine Vollständigkeit der Installationshandlung,
- eine Kompatibilität des Verbindungsmittels und des Anschlusses,
- Verwendung eines Werkzeuges und/oder Art des Werkzeuges, welches zum Fixieren und vorzugsweise Festziehen des Verbindungsmittels verwendet wird.

Die Signatur kann bspw. ein Muster sein, welches in den Vibrationsdaten erkannt werden kann und für zumindest eine der vorgenannten Arten und/oder Ergebnisse spezifisch ist. Hierzu kann bei der Auswertung z. B. ein Mustererkennungsalgorithmus zum Einsatz kommen.

Es ist denkbar, dass bei der Auswertung der Vibrationsdaten eine Untersuchung der Vibrationsdaten hinsichtlich der Signatur durchgeführt wird, wobei die Untersuchung vorzugsweise den Einsatz eines Mustererkennungsalgorithmus und/oder einen Algorithmus des maschinellen Lernens umfasst. Eine Bereitstellung des Mustererkennungsalgorithmus und/oder des Algorithmus des maschinellen Lernens kann die folgenden Schritte umfassen: 1. Sammeln eines ausreichenden Trainingsdatensatzes, der eine ausreichende Anzahl von Signaturen umfasst, um eine genaue Erkennung zu gewährleisten. 2. Vorbereitung der Trainingsdaten durch Vorverarbeitung, wie z.B. Entfernen von Hintergrundrauschen und Skalierung der Signaturen auf eine einheitliche Größe. 3. Auswahl und Anwendung eines geeigneten Mustererkennungsalgorithmus und/oder eines Algorithmus des maschinellen Lernens, um die Signaturen zu analysieren und zu klassifizieren. 4. Validierung des Algorithmus durch Tests an einem separaten Datensatz, um die Genauigkeit und Zuverlässigkeit des Algorithmus zu bestätigen. Ein beispielhaftes künstliches neuronales Netz, das für eine solche Klassifizierung zum Einsatz kommen kann, ist ein Convolutional Neural Network (CNN). Die Konfiguration des CNN kann verschiedene Schichten umfassen, wie z.B. Convolutional Layer, Pooling Layer, Fully Connected Layer und Dropout Layer. Die Anzahl der Schichten und ihre Parameter können je nach Anwendung variieren. Das CNN kann zuverlässig für die Klassifizierung der Vibrationsdaten verwendet werden.

Bevorzugt kann im Rahmen der Erfindung vorgesehen sein, dass bei dem Erkennen ein Umgebungsereignis in einer Umgebung des Anschlusselements und/oder Verbindungsmittels in der Anlage auf Basis der Auswertung erkannt wird, wobei hierzu vorzugsweise bei dem Auswerten die Vibrationsdaten hinsichtlich einer weiteren Signatur untersucht werden, welche für das Umgebungsereignis spezifisch ist. Dabei kann vorzugsweise zumindest eine der nachfolgenden Arten von Umgebungsereignissen unterschieden werden: ein Fehler bei einem Betrieb, einer Wartung und/oder Installation und/oder Inbetriebnahme der Anlage, eine Fremdeinwirkung, eine Beschädigung und/oder eine Anwesenheit eines Benutzers. Dies ermöglicht es, eine umfassende Diagnose der Installationshandlung auch anhand eines Umgebungsereignisses durchzuführen.

Ein weiterer Vorteil kann im Rahmen der Erfindung erzielt werden, wenn ein Ergebnis der Erkennung, vorzugsweise die erkannte Installationshandlung, und bevorzugt eine Art und/oder ein Ergebnis der Installationshandlung und/oder ein erfolgreicher Abschluss der Installationshandlung und/oder ein Umgebungsereignis, in einer Anlagendokumentation automatisch dokumentiert werden. Die Dokumentation kann automatisiert erfolgen und die Anlagendokumentation hierzu durch einen digitalen Datenspeicher bereitgestellt sein. Dies ermöglicht eine zuverlässige Hinterlegung relevanter Angaben zu einer Installation, welche zu einem späteren Zeitpunkt zur Prüfung der Anlage und/oder zur Wartung herangezogen werden kann.

Es ist ferner denkbar, dass die Vibrationsdaten bei einer Installation und/oder Wartung und/oder im laufenden Betrieb der Anlage aufgezeichnet werden, um bei Bedarf und/oder nach Abschluss der Installation und/oder Wartung zur Überprüfung der Anlage und/oder von Installationshandlungen ausgewertet zu werden. Auf diese Weise können relevante Informationen über eine Anlage zuverlässig gespeichert werden, die zu einem späteren Zeitpunkt für die Inspektion und/oder Wartung der Anlage verwendet werden können.

Vorzugsweise kann vorgesehen sein, dass die Vibrationsdaten während der Durchführung der Installationshandlung ausgewertet werden. Dabei kann ein Ergebnis der Erkennung an einen Benutzer ausgegeben werden, um den Benutzer bei der Durchführung der Installationshandlung zu assistieren und insbesondere den korrekten Abschluss der Installationshandlung zu signalisieren. Zum Beispiel kann ein Leuchtmittel wie eine LED in einer bestimmten Farbe (z B. rot) am Anschluss aufleuchten, wenn das Ergebnis einen Fehler indiziert, vorzugsweise ein falsches Verbindungsmittel, das anhand der Vibrationsdaten detektiert wurde. Auch kann das Leuchtmittel ggf. in einer anderen Farbe aufleuchten, wie z. B. grün, wenn die Installationshandlung erfolgreich abgeschlossen wurde. Ebenfalls kann das Ergebnis der Erkennung durch ein Blinkmuster oder andere Farben signalisiert werden, um bspw. Fehler oder Zustände zu signalisieren. Eine weitere Möglichkeit der Ausgabe ist eine Anzeige und/oder eine Audioausgabe, z. B. Sprache, jeweils bspw. direkt am Anschlusselement oder einem separaten Gerät wie Tablet. Optional ist es denkbar, dass auf Basis der Erkennung ein Alarm an einen Benutzer ausgegeben wird.

Ebenfalls Gegenstand der Erfindung ist ein Anschlusselement, insbesondere in der Form eines Moduls, vorzugsweise Feldbusmoduls und/oder IO-Link-Masters, zur Verbindung von Komponenten einer industriellen Anlage im Feld. Das Anschlusselement kann ein oder mehrere Anschlüsse, insbesondere Ports, aufweisen, um jeweils wenigstens ein Verbindungsmittel zur Verbindung des Anschlusselements mit wenigstens einer der Komponenten anzuschließen. Darüber hinaus kann das Anschlusselement einen Sensor und vorzugsweise Vibrationssensor und/oder eine Sensorschnittstelle zu einem Sensor, vorzugsweise Vibrationssensor, aufweisen, um eine sensorischen Erfassung von Vibrationen am und/oder in einer Umgebung des Anschlusselements bereitzustellen. Damit bringt das erfindungsgemäße Anschlusselement die gleichen Vorteile mit sich, wie sie ausführlich mit Bezug auf ein erfindungsgemäßes Verfahren beschrieben worden sind. Zudem kann das Anschlusselement geeignet sein, bei einem erfindungsgemäßen Verfahren eingesetzt zu werden.

Es kann optional möglich sein, dass ein weiterer Anschluss zur Kommunikation mit wenigstens einer dezentralen und/oder zentralen Steuerungseinrichtung vorgesehen ist, um auf Basis der Kommunikation, vorzugsweise Feldbuskommunikation, eine Signal- und/oder Datenübertragung an den einen oder mehreren Anschlüsse, vorzugsweise Ports, für die verbundenen Komponenten vorzunehmen, und insbesondere, um Vibrationsdaten zu übertragen, die aus der sensorischen Erfassung resultieren. Bspw. ist es möglich, dass die Auswertung der Vibrationsdaten nicht im Anschlusselement durchgeführt wird, sondern in der Steuerungseinrichtung. Entsprechend können die Vibrationsdaten hierzu zunächst über den weiteren Anschluss an die Steuerungseinrichtung übertragen werden. Eine weitere Möglichkeit ist, dass die Steuerungseinrichtung die Komponenten ansteuert und/oder auswertet und somit die Signal- und/oder Datenübertragung an den jeweiligen Anschluss auf Basis der Kommunikation erfolgt. Das Anschlusselement kann hierzu als Vermittler dienen. Das Anschlusselement kann daher die Kommunikation von der Steuerungseinrichtung zur Komponente über den entsprechenden Anschluss durchschleifen oder zuvor die Kommunikation mit der Steuerungseinrichtung auswerten. Letzteres ermöglicht, dass auf Basis dieser Auswertung eine Signal- und/oder Datenübertragung mit der Komponente initiiert werden kann. Das Anschlusselement kann somit auch als Adapter für unterschiedliche Kommunikationstechnologien fungieren.

Nach einer weiteren Möglichkeit kann vorgesehen sein, dass eine Schnittstelle, vorzugsweise Bus- oder IO-Link oder Funkschnittstelle oder kabelgebundene Schnittstelle, vorgesehen ist, um Vibrationsdaten zu übertragen, die aus der sensorischen Erfassung resultieren. Auch dies ermöglicht es, dass die Auswertung der Vibrationsdaten nicht im Anschlusselement durchgeführt werden muss, sondern in einer externen Datenverarbeitungsvorrichtung erfolgen kann. Hierzu kann die externe Datenverarbeitungsvorrichtung die Vibrationsdaten über die Schnittstelle erhalten.

Weiter ist es denkbar, dass das Anschlusselement als ein Master für ein Kommunikationssystem zur digitalen Punkt-zu-Punkt Kommunikation, insbesondere als IO-Link-Master, ausgebildet ist. Auf diese Weise kann das Anschlusselement über wenigstens einen der Ports, insbesondere in der Form eines IO-Link-Ports, mit wenigstens einer der Komponenten, insbesondere jeweils in der Form eines IO-Link-Devices, für eine bidirektionale Datenverbindung verbunden werden. Dies ermöglicht es, dass über die Datenverbindung zumindest eine Automatisierungsfunktion der Anlage bereitgestellt werden kann.

Ferner ist es denkbar, dass ein Gehäuse des Anschlusselements aus einem wasserdichten Material hergestellt ist und/oder eine Dichtung aufweist, um eine wasserdichte Abdichtung zu gewährleisten. Dabei kann das Gehäuse dafür ausgebildet sein, um eine Elektronik innerhalb des Gehäuses gegen Eindringen von Wasser und Staub zu schützen. Dabei kann das Anschlusselement mindestens einen Anschluss aufweisen, der für die Verbindung mit einer, vorzugsweise zentralen, Steuerungseinrichtung ausgebildet ist, insbesondere über einen Ethernet, Profibus, ProfiNET, EtherCAT, oder CAN-Bus. Dies hat den Vorteil, dass eine zuverlässige und schnelle Datenübertragung zwischen dem Anschlusselement und der Steuerungseinrichtung gewährleistet ist. Durch die Verwendung eines wasserdichten Gehäuses und/oder einer Dichtung wird zudem eine hohe Schutzklasse erreicht, die das Anschlusselement vor Umwelteinflüssen wie Feuchtigkeit und Staub schützt. Dadurch wird das Anschlusselement in die Lage versetzt, zuverlässig im Feld und außerhalb eines Schaltschranks in der Anlage eingesetzt zu werden.

Außerdem ist es möglich, dass das Anschlusselement einen Datenspeicher, vorzugsweise einen nicht-flüchtigen Datenspeicher, aufweist, um Vibrationsdaten zwischenzuspeichern und/oder nicht-flüchtig zu speichern, die aus der sensorischen Erfassung resultieren. Auf diese Weise kann eine spätere Auswertung und/oder Dokumentation ermöglicht werden.

Ferner ist es denkbar, dass das Anschlusselement selbst eine, vorzugsweise erfindungsgemäße, Datenverarbeitungsvorrichtung aufweist, um zumindest einen Teil der Auswertung der Vibrationsdaten selbst vorzunehmen.

Von weiterem Vorteil kann vorgesehen sein, dass das Anschlusselement als eine dezentrale Automatisierungsplattform ausgebildet ist. Das Anschlusselement kann eine Steuerungseinrichtung wie einen Industrie-PC aufweisen, um dezentral und vorzugsweise mit weiteren Automatisierungsplattformen im Feld der Anlage die Automatisierung der Anlage bereitzustellen. Dabei können vorzugsweise die eine oder mehreren dezentralen Automatisierungsplattformen mit einer gemeinsamen zentralen Steuerung verbunden sein. Ferner kann das Anschlusselement geeignet sein, um mit mehreren Funktionsmodulen verbunden zu werden, welche modular zur Bereitstellung von Automatisierungsfunktionen ergänzt werden können. Hierzu können die Funktionsmodule bspw. eine Motoransteuerung und/oder eine Energieversorgung für Aktoren der Anlage umfassen. Die Funktionsmodule können ferner auch ein Netzteil und/oder eine Feldbusschnittstelle aufweisen.

Es kann vorgesehen sein, dass ein Anschlusselement, vorzugsweise Modul, mit zumindest einer der Komponenten durch ein Kommunikationssystem zur digitalen und insbesondere Punkt-zu-Punkt Kommunikation verbunden ist. Ein konkretes Beispiel für ein solches Kommunikationssystem ist IO-Link. Unter IO-Link wird ein Kommunikationssystem zur Anbindung intelligenter Sensoren und Aktoren an ein Automatisierungssystem bezeichnet, welches in der Norm IEC 61131-9 unter der Bezeichnung Single-drop digital communication interface for small sensors and actuators (SDCI) normiert ist.

Das Kommunikationssystem umfasst dabei bspw. einen Master, insbesondere IO-Link-Master, und einen oder mehrere Geräte, also bspw. Sensoren oder Aktoren, die zur Kommunikation mit dem Master geeignet sind. Dies können konkret IO-Link-Devices sein. Der Master stellt insbesondere die Schnittstelle zur überlagerten Steuerung, d.h. einer Steuerungseinrichtung, vorzugsweise zentralen Steuerungseinrichtung wie einer SPS, zur Verfügung und steuert die Kommunikation mit den angeschlossenen Geräten. Der Master kann einen oder mehrere Anschlüsse, vorzugsweise Ports, insbesondere IO-Link-Ports, aufweisen, an dem jeweils nur ein Gerät angeschlossen werden kann. Dies kann auch ein Hub sein, der als Konzentrator den Anschluss von klassisch schaltenden Sensoren und Aktoren ermöglicht.

Das Gerät, insbesondere IO-Link-Gerät, kann ein (intelligenter) Sensor, Aktor, Hub, oder aber bedingt durch die bidirektionale Kommunikation auch eine Mechatronik-Komponente z. B. ein Greifer oder ein Netzteil mit IO-Link-Anbindung sein.

Das Kommunikationssystem kann eine Punkt-zu-Punkt Kommunikation zwischen dem Master und den Geräten bereitstellen. Das Kommunikationssystem ermöglicht damit eine direkte Verbindung zwischen dem Master und den Geräten, ohne dass eine Vermittlung durch andere Systeme notwendig ist. Dadurch wird eine schnelle und zuverlässige Kommunikation, insbesondere feldbusunabhängig, gewährleistet.

Als Verbindungsmittel können Kabel und/oder Steckverbinder nach Standards wie M12, M8 oder M5 sowie drei-adrige Kabel in Frage kommen. Dies kann den Vorteil haben, dass eine schnelle und einfache Montage der Sensoren und Aktoren gewährleistet wird. Die Verbindung der Verbindungsmittel kann bspw. über eine Bajonett- oder Schraubverbindung erfolgen.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann ferner zumindest teilweise nicht-flüchtig und/oder als Software zum Download und/oder als Cloud-Service und/oder als ausführbares Programm und/oder als Konfigurationsdatei und/oder als Programmbibliothek und/oder als Quelltext und/oder in kompilierter und/oder verschlüsselter und/oder komprimierter Form und/oder in einer Kombination davon vorliegen.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Ferner können auch nur einzelne der Schritte des Verfahrens computerimplementiert sein. Mit anderen Worten kann jeder einzelne der Schritte des Verfahrens optional automatisiert durchgeführt werden und/oder computerimplementiert sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung von Teilen eines Anschlusselements gemäß Ausführungsvarianten der Erfindung.
- Fig. 2: eine schematische Darstellung einer Topologie einer Anlage.
- Fig. 3: eine Visualisierung eines Verfahrens gemäß Ausführungsvarianten der Erfindung.
- Fig. 4: eine schematische Darstellung von Teilen eines Anschlusselements gemäß Ausführungsvarianten der Erfindung.

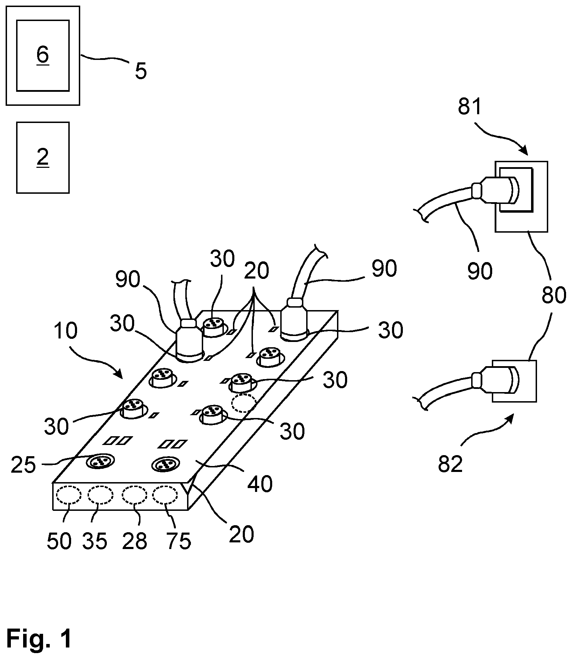

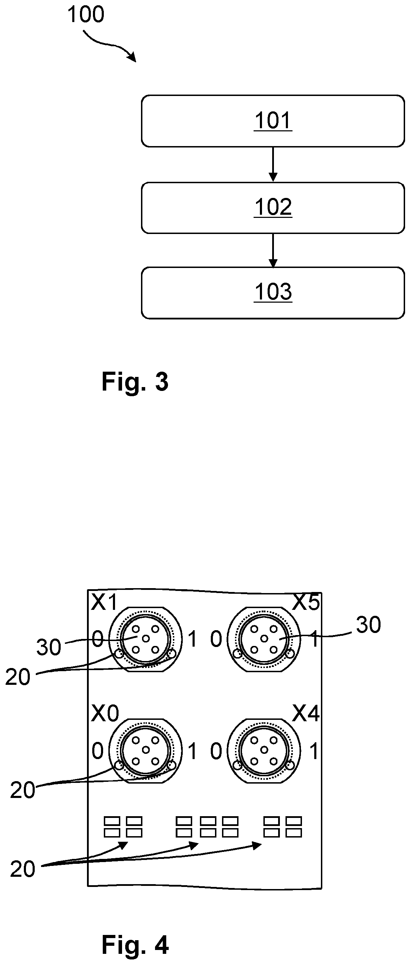

In Fig. 1 und 4 ist schematisch ein beispielhaftes Anschlusselement 10 gezeigt. Das Anschlusselement 10 ist in der gezeigten Ausführungsvariante der Erfindung in der Form eines Moduls 10 vorgesehen. Das Modul 10 kann bspw. als ein Feldbusmodul 11 und/oder ein IO-Link-Master 12 ausgeführt sein. Allgemeiner formuliert dient das Anschlusselement 10 zur Verbindung von Komponenten 80 einer industriellen Anlage 1 im Feld.

Das Anschlusselement 10 kann ein oder mehrere Anschlüsse 30, insbesondere Ports 30, aufweisen. Diese dienen dazu, um daran jeweils wenigstens ein Verbindungsmittel 90 zur Verbindung des Anschlusselements 10 mit wenigstens einer der Komponenten 80 anzuschließen. Auf diese Weise kann die jeweilige Komponente 80 mit dem Anschlusselement 10 über den entsprechenden Anschluss 30 zum Daten- und/oder Signalaustausch verbunden werden. Ferner ist dargestellt, dass optionale Leuchtmittel 20 am Anschlusselement vorgesehen sein können.

Des Weiteren kann das Anschlusselement 10 einen Sensor 50, vorzugsweise Vibrationssensor 50, und/oder eine Sensorschnittstelle 75 zu einem Sensor 50, vorzugsweise Vibrationssensor 50, aufweisen. Damit kann eine sensorischen Erfassung von Vibrationen am und/oder in einer Umgebung des Anschlusselements 10 bereitgestellt werden. Dies ermöglicht eine Auswertung der Vibrationsdaten, bei welcher die Vibrationsdaten hinsichtlich einer Signatur untersucht werden, die für wenigstens eine Installationshandlung spezifisch ist. Auf diese Weise kann die wenigstens eine Installationshandlung auf Basis der Auswertung erkannt werden.

Die Installationshandlung kann z. B. eine Handlung sein, die ein Werker zum Anschließen der wenigstens einen der Komponenten 80 an wenigstens einen der Anschlüsse 30 des Anschlusselements 10 durchführt. Somit kann die Installationshandlung bspw. ein Verbinden/Stecken/Hineindrehen der Verbindungsmittel 90 betreffen. Für eine Installation und/oder Wartung der Anlage 1 sind dabei oft eine Vielzahl solcher Installationshandlungen vorgesehen, um eine Topologie der Anlage 1 aufzubauen.

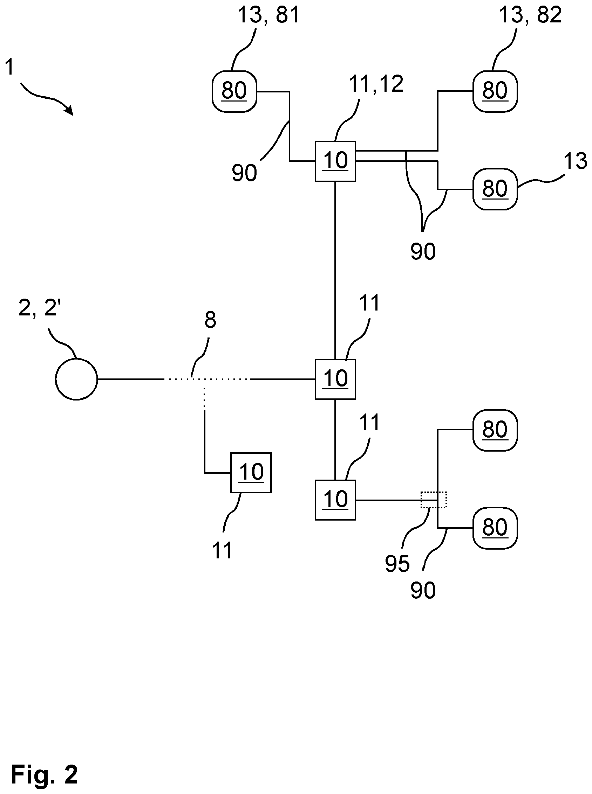

In Fig. 2 wird eine Topologie der Anlage 1 mit weiteren Einzelheiten dargestellt. Die Anlage 1 kann als eine elektrische Maschine und/oder eine industrielle Anlage ausgebildet sein. Beispiele für eine solche industrielle und insbesondere elektrische Anlage 1 sind eine Automatisierungsanlage wie ein elektrisches Steuerungssystem, ein elektrisches Mess- und Regelungssystem, ein elektrisches Antriebssystem oder eine Förder- und/oder Fertigungsanlage. Die industrielle Anlage 1 kann ferner eine hydraulische oder eine pneumatische oder eine fluide oder eine mechanische Anlage 1 sein. Bei der Anlage 1 können entsprechend - automatisiert gesteuert - Flüssigkeiten oder Gase durch Rohrleitungen oder Ventile transportiert oder ein Kühlmittel zugeführt werden oder mechanische Kräfte auf ein Objekt ausgeübt werden, um eine gewünschte Automatisierungsfunktion bereitzustellen. Weitere Beispiele für solche Anlagen 1 sind eine hydraulische Presse, eine pneumatische Förderanlage, eine fluide Kühlanlage oder eine mechanische Fertigungsmaschine.

Die industrielle Anlage 1 kann gemäß Fig. 2 als eine industrielle Automatisierungsanlage 1 ausgeführt sein, bei welcher zumindest ein Teil der Komponenten 80 als Geräte 81,82 ausgeführt ist, die zumindest Aktoren 81 und/oder Sensoren 82 umfassen, um Automatisierungsfunktionen der Anlage 1 bereitzustellen. Dabei können die Geräte 81,82 über die Verbindungsmittel 90, insbesondere Kabel 90, mit den Anschlusselementen 10 verbunden sein, um über die Verbindung von zumindest einer Steuerungseinrichtung 2 angesteuert und/oder ausgewertet zu werden. Die Steuerungseinrichtung 2 kann dabei als eine zentrale Steuerungseinrichtung 2' ausgeführt sein, welche mit mehreren der Anschlusselementen 10 verbunden ist, um die mit den Anschlusselementen 10 verbundenen Komponenten 80 zentral anzusteuern und/oder auszuwerten.

Es ist in Fig. 2 erkennbar, dass eine oder mehrere Gruppen der Geräte 81,82, jeweils umfassend eine Mehrzahl der Geräte 81,82, jeweils über die Verbindungsmittel 90 mit einem gemeinsamen der Anschlusselemente 10 verbunden werden. Damit ist es möglich, dass die Geräte 81,81 dezentral im Feld der Anlage 1, und insbesondere über das entsprechende Anschlusselement 10 als Verteiler, mit der Steuerungseinrichtung 2 für die Ansteuerung und/oder Auswertung zum Daten- und/oder Signalaustausch verbunden werden. Dabei können die Geräte 81,82 zumindest einer der Gruppen mit ihrem gemeinsamen Anschlusselement 10 vorzugsweise sternförmig verbunden werden, und bevorzugt über das gemeinsamen Anschlusselement 10 an ein Feldbussystem 8 angebunden werden.

Es ist ferner dargestellt, dass zumindest ein Teil der Anschlusselemente 10 als Feldbusmodul 11 und/oder als Mastermodul/IO-Link-Master 12 ausgebildet sein können. Für den IO-Link-Master 12 können die Geräte 80 teilweise als entsprechende IO-Link-Devices 13 ausgebildet sein.

Darüber hinaus ist in Fig. 2 ein Verbindungselement 95, insbesondere T-Stück, dargestellt, um mehr als eine Komponente 80 mit einem Anschluss 30 des Anschlusselements 10 zu verbinden.

In Fig. 1 ist ferner gezeigt, dass ein weiterer Anschluss 25 zur Kommunikation mit wenigstens einer dezentralen und/oder zentralen Steuerungseinrichtung 2 vorgesehen sein kann, um auf Basis der Kommunikation, vorzugsweise Feldbuskommunikation, eine Signal- und/oder Datenübertragung an den einen oder mehreren Anschlüsse 30, vorzugsweise Ports 30, für die verbundenen Komponenten 80 vorzunehmen, und insbesondere, um Vibrationsdaten zu übertragen, die aus der sensorischen Erfassung resultieren. Darüber hinaus kann eine Schnittstelle 35, vorzugsweise Bus- oder IO-Link oder Funkschnittstelle oder kabelgebundene Schnittstelle, vorgesehen sein, um Vibrationsdaten zu übertragen, die aus der sensorischen Erfassung resultieren.

Das Anschlusselement kann ferner einen Datenspeicher 28, vorzugsweise einen nicht-flüchtigen Datenspeicher, aufweisen, um Vibrationsdaten zwischenzuspeichern und/oder nicht-flüchtig zu speichern, die aus der sensorischen Erfassung resultieren.

Fig. 3 veranschaulicht gemäß Ausführungsbeispielen der Erfindung ein Verfahren 100 zur Erkennung wenigstens einer Installationshandlung bei einer industriellen Anlage 1. Bei der Anlage 1 kann, wie in Fig. 2 veranschaulicht wird, eine Verbindung von Komponenten 80 der Anlage 1 im Feld durch ein oder mehrere Anschlusselemente 10, insbesondere Module 10, sowie über ein oder mehrere Verbindungsmittel 90 vorgesehen sein.

Gemäß einem ersten Verfahrensschritt 101 kann ein Ermitteln von Vibrationsdaten vorgesehen sein. Die Vibrationsdaten können aus einer sensorischen Erfassung zumindest eines der einen oder mehreren Anschlusselemente 10 und/oder an zumindest einem der einen oder mehreren Verbindungsmittel 90 resultieren. Hierzu kann ein Sensor 50 wie ein Vibrationssensor 50 in dem einen oder den mehreren Anschlusselementen 10 und/oder in dem einen oder den mehreren Verbindungsmitteln 90 vorgesehen sein.

Gemäß einem zweiten Verfahrensschritt 102 kann ein Auswerten der Vibrationsdaten erfolgen. Dabei können die Vibrationsdaten hinsichtlich einer Signatur untersucht werden, welche für die wenigstens eine Installationshandlung in der Anlage 1 spezifisch ist.

Gemäß einem dritten Verfahrensschritt 103 kann ein Erkennen der wenigstens einen Installationshandlung auf Basis der Auswertung 102 vorgesehen sein. Dies ermöglicht es z. B., die Installationshandlung qualitativ zu bewerten und/oder zu diagnostizieren, also bspw. einen Fehler bei der Installationshandlung wie eine unvollständige Ausführung und/oder eine Beschädigung festzustellen.

Die Integration eines Sensors 50 und vorzugsweise Vibrationssensors 50 in das eine oder die mehreren Anschlusselemente 10 und/oder in das eine oder die mehreren Verbindungsmittel 90 ermöglicht es, eine Vibration direkt am jeweiligen Anschlusselement 10 bzw. Verbindungsmittel 90 zu detektieren und auszuwerten. Hierdurch lassen sich z. B. Installationshandlungen am Anschlusselement 10 erkennen und bewerten (z. B. "Wurde IP67 fähig hineingedreht?"). Beispiele sind das Anschrauben und Anschließen von Schrauben und/der Steckverbindern durch eine Drehbewegung und/oder durch ein Einstecken an Anschlüssen des Anschlusselements 10, das Festziehen von Schrauben oder die korrekte Verwendung eines Drehmomentschlüssels. Diese Installationshandlungen erzeugen Geräusche und Vibrationen, die durch den Sensor/Vibrationssensor 50 erfasst werden können.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Anlage
- 2: Steuerungseinrichtung
- 5: Vorrichtung
- 6: Computerprogramm
- 8: Feldbussystem

- 10: Anschlusselement, Modul
- 11: Feldbusmodul
- 12: IO-Link-Master
- 13: IO-Link-Device

- 2': zentralen Steuerung

- 20: Leuchtmittel
- 28: Datenspeicher

- 30: Anschluss, Port
- 35: Schnittstelle

- 40: Gehäuse

- 50: Sensor, Vibrationssensor

- 75: Sensorschnittstelle

- 80: Komponente
- 81: erste Komponente, Aktor
- 82: zweite Komponente, Sensor

- 90: Verbindungsmittel, Kabel
- 95: Verbindungselement, T-Stück

- 100: Verfahren
- 101: erster Verfahrensschritt
- 102: zweiter Verfahrensschritt
- 103: dritter Verfahrensschritt

## Patentansprüche

1. Verfahren (100) zur Erkennung wenigstens einer Installationshandlung bei einer industriellen Anlage (1), insbesondere einer elektrischen Maschine und/oder einer industriellen Automatisierungsanlage, bei welcher eine Verbindung von Komponenten (80) der Anlage (1) im Feld durch ein oder mehrere Anschlusselemente (10), insbesondere Module (10), sowie über ein oder mehrere Verbindungsmittel (90) vorgesehen ist, umfassend die nachfolgenden Schritte:
- Ermitteln (101) von Vibrationsdaten, wobei die Vibrationsdaten aus einer sensorischen Erfassung zumindest eines der einen oder mehreren Anschlusselemente (10) und/oder an zumindest einem der einen oder mehreren Verbindungsmittel (90) resultiert,
- Auswerten (102) der Vibrationsdaten, wobei die Vibrationsdaten hinsichtlich einer Signatur untersucht werden, welche für die wenigstens eine Installationshandlung in der Anlage (1) spezifisch ist,
- Erkennen (103) der wenigstens einen Installationshandlung auf Basis der Auswertung (102).

2. Verfahren (100) nach Anspruch 1,
**dadurch gekennzeichnet,**
**dass** die industrielle Anlage (1) als eine industrielle Automatisierungsanlage (1) ausgeführt ist, bei welcher zumindest ein Teil der Komponenten (80) als Geräte (81,82) ausgeführt ist, die zumindest Aktoren (81) und/oder Sensoren (82) umfassen, um Automatisierungsfunktionen der Anlage (1) bereitzustellen,
wobei die Geräte (81,82) über die Verbindungsmittel (90), insbesondere Kabel (90), mit den Anschlusselementen (10) verbunden sind, um über die Verbindung von zumindest einer Steuerungseinrichtung (2') angesteuert und/oder ausgewertet zu werden, wobei
eine oder mehrere Gruppen der Geräte (81,82), jeweils umfassend eine Mehrzahl der Geräte (81,82), jeweils über die Verbindungsmittel (90) mit einem gemeinsamen der Anschlusselemente (10) verbunden werden, um darüber dezentral im Feld der Anlage (1), und insbesondere über das entsprechende Anschlusselement (10) als Verteiler, mit der Steuerungseinrichtung (2) für die Ansteuerung und/oder Auswertung zum Daten- und/oder Signalaustausch verbunden zu werden, um auf diese Weise die Automatisierungsfunktionen der Anlage (1) bereitzustellen, wobei die Geräte (81,82) zumindest einer der Gruppen mit ihrem gemeinsamen Anschlusselement (10) vorzugsweise sternförmig verbunden werden, und bevorzugt über das gemeinsamen Anschlusselement (10) an ein Feldbussystem (8) angebunden werden,
wobei die wenigstens eine Installationshandlung eine Herstellung zumindest einer der Verbindungen zwischen den Geräten (81,82) und den Anschlusselementen (10) umfasst.

3. Verfahren (100) nach Anspruch 2,
**dadurch gekennzeichnet,**
**dass** zumindest eines der Anschlusselemente (10) selbst die Steuerungseinrichtung (2) umfasst, um darüber zumindest einen Teil der gesamten Anlage (1) zu automatisieren, und vorzugsweise jeweils als eine dezentrale Automatisierungsplattform ausgebildet ist, die mit weiteren Automatisierungsplattformen dezentral in der Anlage (1) die Automatisierung der Anlage (1) bereitzustellen, wobei die wenigstens eine Installationshandlung eine mechanische und/oder elektrische Installation der wenigstens einen Automatisierungsplattform umfasst.

4. Verfahren (100) nach einem der vorhergehenden Ansprüche,
**dadurch gekennzeichnet,**
**dass** bei dem Erkennen (103) zumindest eine der nachfolgenden Arten und/oder Ergebnisse der Installationshandlung unterschieden wird, vorzugsweise durch eine Klassifizierung der Installationshandlung anhand der Signatur:
- eine Herstellung einer Steckverbindung am Anschlusselement (10),
- Einführen wenigstens eines der Verbindungsmittel (90) in einen Anschluss (30), vorzugsweise Port (30) des Anschlusselements (10),
- Fixieren des Verbindungsmittels (90) durch ein Drehen oder Einrasten,
- Vollständigkeit des Einrastens,
- Vollständigkeit der Drehung,
- ein erfolgreicher Abschluss der Installationshandlung,
- eine Art oder Kennzeichnung des Verbindungsmittels (90),
- eine Unvollständigkeit der Installationshandlung,
- eine Vollständigkeit der Installationshandlung,
- eine Kompatibilität des Verbindungsmittels (90) und des Anschlusses (30),
- Verwendung eines Werkzeuges und/oder Art des Werkzeuges, welches zum Fixieren und vorzugsweise Festziehen des Verbindungsmittels verwendet wird.

5. Verfahren (100) nach einem der vorhergehenden Ansprüche,
**dadurch gekennzeichnet,**
**dass** bei dem Erkennen (103) ein Umgebungsereignis in einer Umgebung des Anschlusselements (10) und/oder Verbindungsmittels (90) in der Anlage (1) auf Basis der Auswertung (102) erkannt wird, wobei hierzu vorzugsweise bei dem Auswerten (102) die Vibrationsdaten hinsichtlich einer weiteren Signatur untersucht werden, welche für das Umgebungsereignis spezifisch ist, wobei vorzugsweise zumindest eine der nachfolgenden Arten von Umgebungsereignissen unterschieden wird: ein Fehler bei einem Betrieb, einer Wartung und/oder Installation und/oder Inbetriebnahme der Anlage (1), eine Fremdeinwirkung, eine Beschädigung und/oder eine Anwesenheit eines Benutzers.

6. Verfahren (100) nach einem der vorhergehenden Ansprüche,
**dadurch gekennzeichnet,**
**dass** ein Ergebnis der Erkennung (103), vorzugsweise die erkannte Installationshandlung, und bevorzugt eine Art und/oder ein Ergebnis der Installationshandlung und/oder ein erfolgreicher Abschluss der Installationshandlung und/oder ein Umgebungsereignis, in einer Anlagendokumentation automatisch dokumentiert werden.

7. Verfahren (100) nach einem der vorhergehenden Ansprüche,
**dadurch gekennzeichnet,**
**dass** die Vibrationsdaten bei einer Installation und/oder Wartung und/oder im laufenden Betrieb der Anlage (1) aufgezeichnet werden, um bei Bedarf und/oder nach Abschluss der Installation und/oder Wartung zur Überprüfung der Anlage und/oder von Installationshandlungen ausgewertet zu werden.

8. Verfahren (100) nach einem der vorhergehenden Ansprüche,
**dadurch gekennzeichnet,**
**dass** die Vibrationsdaten während der Durchführung der Installationshandlung ausgewertet werden, und ein Ergebnis der Erkennung (103) an einen Benutzer ausgegeben wird, um den Benutzer bei der Durchführung der Installationshandlung zu assistieren und insbesondere den korrekten Abschluss der Installationshandlung zu signalisieren.

9. Verfahren (100) nach einem der vorhergehenden Ansprüche,
**dadurch gekennzeichnet,**
**dass** auf Basis der Erkennung (103) ein Alarm an einen Benutzer ausgegeben wird.

10. Anschlusselement (10), insbesondere in der Form eines Moduls (10), vorzugsweise Feldbusmoduls (11) und/oder IO-Link-Masters (12), zur Verbindung von Komponenten (80) einer industriellen Anlage im Feld, aufweisend:
- ein oder mehrere Anschlüsse (30), insbesondere Ports (30), um jeweils wenigstens ein Verbindungsmittel (90) zur Verbindung des Anschlusselements (10) mit wenigstens einer der Komponenten (80) anzuschließen,
- einen Sensor (50), vorzugsweise Vibrationssensor (50), und/oder eine Sensorschnittstelle (75) zu einem Sensor (50), vorzugsweise Vibrationssensor (50), um eine sensorischen Erfassung von Vibrationen am und/oder in einer Umgebung des Anschlusselements (10) bereitzustellen.

11. Anschlusselement (10) nach Anspruch 10,
**dadurch gekennzeichnet,**
**dass** ein weiterer Anschluss (25) zur Kommunikation mit wenigstens einer dezentralen und/oder zentralen Steuerungseinrichtung (2) vorgesehen ist, um auf Basis der Kommunikation, vorzugsweise Feldbuskommunikation, eine Signal- und/oder Datenübertragung an den einen oder mehreren Anschlüsse (30), vorzugsweise Ports (30), für die verbundenen Komponenten (80) vorzunehmen, und insbesondere, um Vibrationsdaten zu übertragen, die aus der sensorischen Erfassung resultieren.

12. Anschlusselement (10) nach Anspruch 10 oder 11,
**dadurch gekennzeichnet,**
**dass** eine Schnittstelle (35), vorzugsweise Bus- oder IO-Link oder Funkschnittstelle oder kabelgebundene Schnittstelle, vorgesehen ist, um Vibrationsdaten zu übertragen, die aus der sensorischen Erfassung resultieren, und/oder
**dass** das Anschlusselement (10) als ein Master für ein Kommunikationssystem zur digitalen Punkt-zu-Punkt Kommunikation, insbesondere als IO-Link-Master, ausgebildet ist, um über wenigstens einen der Ports (30), insbesondere in der Form eines IO-Link-Ports, mit wenigstens einer der Komponenten (80), insbesondere jeweils in der Form eines IO-Link-Devices, für eine bidirektionale Datenverbindung verbunden zu werden, und um über die Datenverbindung zumindest eine Automatisierungsfunktion der Anlage (1) bereitzustellen, und/oder
**dass** ein Gehäuse (40) des Anschlusselements (10) aus einem wasserdichten Material hergestellt ist und eine Dichtung (45) aufweist, um eine wasserdichte Abdichtung zu gewährleisten, und wobei das Gehäuse (12) dafür ausgebildet ist, um eine Elektronik innerhalb des Gehäuses (40) gegen Eindringen von Wasser und Staub zu schützen, wobei das Anschlusselement (10) mindestens einen Anschluss (25) aufweist, der für die Verbindung mit einer zentralen Steuerungseinrichtung (2) ausgebildet ist, insbesondere über einen Ethernet, Profibus, ProfiNET, EtherCAT, oder CAN-Bus, und/oder
**dass** das Anschlusselement (10) einen Datenspeicher (28), vorzugsweise einen nicht-flüchtigen Datenspeicher, aufweist, um Vibrationsdaten zwischenzuspeichern und/oder nicht-flüchtig zu speichern, die aus der sensorischen Erfassung resultieren.

13. Anschlusselement (10) nach einem der Ansprüche 10 bis 12,
**dadurch gekennzeichnet,**
**dass** das Anschlusselement (10) als eine dezentrale Automatisierungsplattform (10) ausgebildet ist, welche eine Steuerungseinrichtung (2) aufweist, um dezentral und vorzugsweise mit weiteren Automatisierungsplattformen im Feld der Anlage (1) die Automatisierung der Anlage (1) bereitzustellen, wobei vorzugsweise die eine oder mehreren dezentralen Automatisierungsplattformen (10) mit einer gemeinsamen zentralen Steuerung (2') verbunden sind.

14. Computerprogramm (6), umfassend Befehle, die bei der Ausführung des Computerprogramms (6) durch einen Computer diesen veranlassen, das Verfahren (100) nach einem der Ansprüche 1 bis 9 auszuführen.

15. Vorrichtung (5) zur Datenverarbeitung, die eingerichtet ist, das Verfahren (100) nach einem der Ansprüche 1 bis 9 auszuführen.
